# EUROPÄISCHE PATENTSCHRIFT

(11) **EP 3 212 997 B1**
(45) Veröffentlichungstag und Bekanntmachung des Hinweises auf die Patenterteilung: **29.08.2018**
(21) Anmeldenummer: 15794846.4
(22) Anmeldetag: 29.10.2015
(51) Int. Cl.: F21V 5/00, G02B 19/00, F21V 5/04, F21V 7/00, F21Y 115/10, F21Y 103/00

(54) **OPTISCHES ELEMENT SOWIE ANORDNUNG ZUR LICHTABGABE MIT EINEM OPTISCHEN ELEMENT**
OPTICAL ELEMENT AND A LIGHT-EMITTING ARRANGEMENT WHICH COMPRISES AN OPTICAL ELEMENT
ÉLÉMENT OPTIQUE AINSI QU'ENSEMBLE D'ÉMISSION DE LUMIÈRE COMPRENANT UN ÉLÉMENT OPTIQUE

(30) Priorität: 30.10.2014 DE 102014222169
(43) Veröffentlichungstag der Anmeldung: 06.09.2017
(73) Patentinhaber: Zumtobel Lighting GmbH, 6850 Dornbirn (AT)
(72) Erfinder: EBNER, Stephan, 6850 Dornbirn (AT)
(74) Vertreter: Thun, Clemens
(86) Internationale Anmeldenummer: PCT/EP2015/075137
(87) Internationale Veröffentlichungsnummer: WO 2016/066753

(56) Entgegenhaltungen:
- EP-A2- 1 167 870
- EP-A2- 2 827 179
- DE-A1-102011 085 275
- DE-A1-102012 102 105
- US-A- 5 197 792
- US-A1- 2005 111 235
- US-A1- 2005 286 251
- US-B1- 6 739 738
- US-B1- 7 712 931

## Beschreibung

Die Erfindung betrifft ein optisches Element sowie eine Anordnung zur Lichtabgabe mit einem solchen optischen Element.

Aus dem Stand der Technik sind Anordnungen zur Lichtabgabe bekannt, die eine LED-Lichtquelle (LED: Licht emittierende Diode) sowie ein optisches Element zur Beeinflussung des von der LED-Lichtquelle abgestrahlten Lichts umfassen. Beispielsweise ist aus der DE 10 2007 013 082 A1 eine Signalleuchte bekannt, die eine Optikeinheit aufweist, die als flügelförmiges Lichtleitelement ausgebildet ist. An ihrer Rückseite weist die Optikeinheit dabei eine Lichteinkoppelfläche auf und an ihrer Vorderseite eine Lichtauskoppelfläche. In Hauptabstrahlrichtung vor der Lichtquelle weist die Lichtauskoppelfläche einen Lichtumlenkabschnitt zur Umlenkung des eingekoppelten Lichts in Richtung Rückseite auf. Die Rückseite weist einen Reflexionsabschnitt mit Reflexionselementen auf, durch die das Licht in die Hauptabstrahlrichtung umgelenkt wird.

Ein Problem bei den bisher bekannten Anordnungen besteht darin, dass es zu einem nicht vernachlässigbaren Streulichtanteil kommen kann. Dies kann insbesondere zu unerwünschten Blendungseffekten führen, die mit entsprechend erhöhten UGR-Werten (UGR: Unified Glare Rating) einhergehen.

Aus der US 6,739,738 B1 ist ein längliches optisches Element mit mehreren zellenartigen Lichteintrittsbereichen für LEDs bekannt. Ein Teil des von den LEDs ausgestrahlten Lichts wird an der stufenförmigen Rückseite des optischen Elements an einem hierzu ausgebildeten Flächenbereich umgelenkt und verlässt anschließend das optische Element über einen vorderseitig ausgebildeten Lichtaustrittsbereich.

Aus der US 2005/0111235 A1 ist ein optisches Element für LEDs bekannt, bei dem das Licht nach einer Umlenkung an der Rückseite über die Vorderseite abgegeben wird. An der Rückseite ist das optische Element stufenartig geformt.

Aus der US 2005/0286251 A1 ist ein Reflektor mit einer stufenförmigen Rückseite zur Lichtumlenkung bekannt. Aus der US 5,197,792 ist eine längliche Beleuchtungsvorrichtung bekannt, bei der das Licht durch eine stufenartig geformte Rückseite auf einen größeren Bereich verteilt und dann über die Vorderseite abgegeben wird. Aus der US 7,712,931 B1 ist eine Beleuchtungsvorrichtung mit Flächenbereichen bekannt, die Abschnitt von Kreiszylindern beschreiben.

Der Erfindung liegt die Aufgabe zugrunde, ein entsprechendes verbessertes optisches Element bzw. eine entsprechende verbesserte Anordnung zur Lichtabgabe anzugeben. Insbesondere soll dabei die Gefahr eines unerwünschten Blendungseffekts verringert sein.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein optisches Element zur Beeinflussung eines von einer Lichtquelle abgestrahlten Lichts vorgesehen, wobei sich das optische Element entlang einer Längsachse erstreckt. Das optische Element weist eine, der Lichtquelle abgewandte Vorderseite und eine, der Lichtquelle zugewandte Rückseite auf, wobei an der Rückseite mehrere zellenartige Lichteintrittsbereiche zum Eintritt des Lichts ausgebildet sind, die sich längs einer zu der Längsachse parallelen Geraden in einer Reihe erstrecken. Außerdem ist an der Rückseite ein umlenkender Flächenbereich zur zumindest teilweisen Umlenkung des Lichts ausgebildet, der sich mit Bezug auf die Gerade auf einer Seite neben den Lichteintrittsbereichen anschließt. An der Vorderseite ist ein Lichtaustrittsbereich zum zumindest teilweisen Austritt des Lichts ausgebildet. Der umlenkende Flächenbereich erstreckt sich dabei entlang der Längsachse und weist Flächenbereiche auf, die so ausgebildet sind, dass ihre Flächennormalen jeweils mit der Längsache einen Winkel einschließen, der kleiner oder größer als 90° ist.

Durch die so orientierten Flächenbereiche wird erzielt, dass in dem optischen Element weniger Lichtstrahlen in einer Richtung parallel zu der Längsachse nach Art eines Lichtleiters weitergeleitet werden und in der Folge zu Blendungseffekten führen. Somit ist die Gefahr eines unerwünschten Blendungseffekts verringert.

Vorzugsweise ist dabei durch die Flächenbereiche eine wellenartige Struktur gebildet, die mit ihrer Haupterstreckung parallel zur Längsachse ausgerichtet ist. Hierdurch lässt sich erzielen, dass Lichtstrahlen entsprechend umgelenkt werden, die in unterschiedlichen Lichteintrittsbereichen in das optische Element eintreten.

Vorzugsweise sind die Flächenbereiche aufgrund ihrer wellenartigen Struktur so gestaltet, dass sie - entlang der Längsachse betrachtet - an mehreren Stellen einen maximalen Abstand von der Geraden aufweisen, wobei diese Stellen mit mittleren Bereichen der Lichteintrittsbereiche korrelieren, insbesondere übereinstimmen. Durch diese Gestaltung lässt sich erzielen, dass besonders viele Lichtstrahlen, die in einem Lichteintrittsbereich in das optische Element eintreten, entsprechend umgelenkt werden.

Vorzugsweise sind die Flächenbereiche durch eine abgerundete Strukturierung gebildet und/oder durch plane Flächen, die durch Kanten voneinander abgegrenzt sind. Hierdurch lassen sich die Flächenbereiche vorteilhaft herstellen und dabei geeignet effektiv gestalten.

Erfindungsgemäß weist der umlenkende Flächenbereich - normal zu der Längsachse betrachtet - mehrere Abstufungen auf. Hierdurch lässt sich erzielen, dass die Lichtstrahlen in einer Ebene normal zu der Längsachse über einen weiten Bereich verteilt werden.

Erfindungsgemäß sind dabei die Flächenbereiche an derjenigen der Abstufungen ausgebildet, die der Geraden am nächsten gelegen ist. Hierdurch lässt sich die erwünschte Umlenkung der Lichtstrahlen besonders effektiv erzielen.

Vorzugsweise sind dabei die Flächenbereiche lediglich an derjenigen der Abstufungen ausgebildet, die der Geraden am nächsten gelegen ist. Dies ist herstellungstechnisch vorteilhaft.

Gemäß einem weiteren Aspekt der Erfindung ist eine Anordnung zur Lichtabgabe vorgesehen, die eine Lichtquelle zur Abstrahlung eines Lichts aufweist und ein erfindungsgemäßes optisches Element, wobei die Anordnung derart gestaltet ist, dass das Licht zumindest teilweise über die Lichteintrittsbereiche in das optische Element eintritt.

Erfindungsgemäß umfasst dabei die Lichtquelle mehrere LEDs, wobei die Gestaltung derart ist, dass das Licht von zwei LEDs über einen der Lichteintrittsbereiche in das optische Element eintritt.

Die Erfindung wird im Folgenden anhand eines Ausführungsbeispiels und mit Bezug auf die Zeichnungen näher erläutert. Es zeigen:
- Fig. 1: eine Skizze eines Querschnitts durch ein Ausführungsbeispiel einer erfindungsgemäßen Anordnung,
- Fig. 2: eine perspektivische Skizze eines Endbereichs des optischen Elements,
- Fig. 3: eine Skizze eines Längsschnitts durch einen Bereich eines entsprechenden optischen Elements ohne erfindungsgemäße schräge Flächenbereiche,
- Fig. 4a: eine perspektivische Skizze eines entsprechenden optischen Elements ohne erfindungsgemäße schräge Flächenbereiche,
- Fig. 4b: ein erfindungsgemäßes optisches Element, bei dem die schrägen Flächenbereichen lediglich an derjenigen Abstufung ausgebildet sind, die der Geraden der Lichteintrittsbereiche am nächsten liegt,
- Fig. 4c: ein entsprechendes optisches Element, bei dem an allen Abstufungen erfindungsgemäße schräge Flächenbereiche ausgebildet sind,
- Fig. 5a: ein entsprechendes optisches Element ohne erfindungsgemäße schräge Flächenbereiche,
- Fig. 5b: ein erfindungsgemäßes optisches Element, bei dem die Flankenbereiche der Lichteintrittsbereich verkippt gestaltet sind und
- Fig. 5c: ein entsprechendes optisches Element, bei dem die Flankenbereiche der Lichteintrittsbereich abgerundet gestaltet sind.

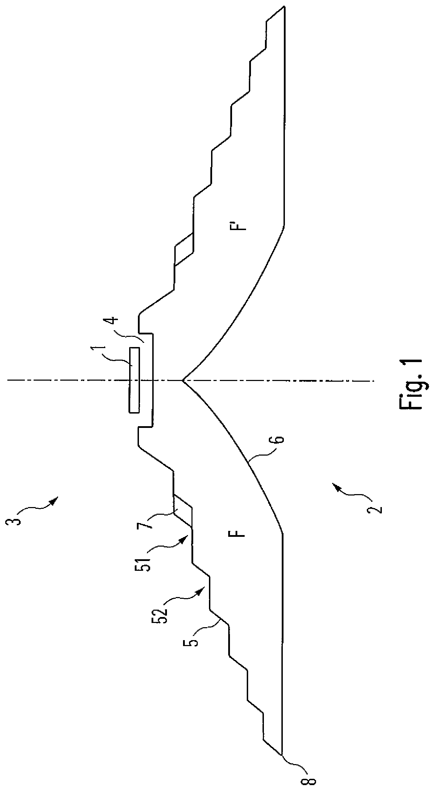

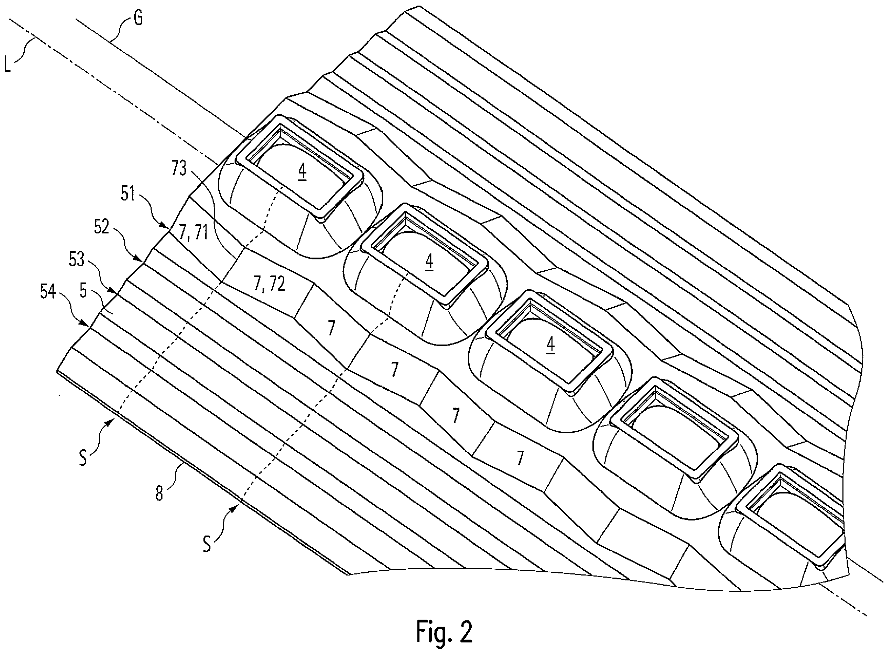

Fig. 2 zeigt eine Skizze eines Endbereichs eines Ausführungsbeispiels eines erfindungsgemäßen optischen Elements. Das optische Element erstreckt sich entlang einer Längsachse L. Fig. 1 zeigt eine Skizze eines Querschnitts normal zu der Längsache L. Das optische Element ist zur Beeinflussung eines von einer in Fig. 1 skizzierten Lichtquelle 1 abgestrahlten Lichts ausgestaltet. Es weist eine, der Lichtquelle 1 abgewandte Vorderseite 2 auf und eine, der Lichtquelle 1 zugewandte Rückseite 3.

Eine entsprechende Anordnung zur Lichtabgabe umfasst dementsprechend das optische Element und die Lichtquelle 1.

Bei der Lichtquelle 1 handelt es sich vorzugsweise um eine LED-Lichtquelle 1, die wenigstens eine LED als Licht abgebendes Element umfasst.

An der Rückseite 3 des optischen Elements sind mehrere zellenartige Lichteintrittsbereiche 4 zum Eintritt des Lichts ausgebildet, die sich längs einer zu der Längsachse L parallelen Geraden G in einer Reihe erstrecken. Vorzugsweise sind durch die Lichteintrittsbereiche 4 jeweils topfartig geformte Ausnehmungen zum Lichteintritt gebildet. Der Boden der Topfform ist dabei vorzugsweise linsenförmig gewölbt.

Außerdem ist an der Rückseite 3 ein umlenkender Flächenbereich 5 zur zumindest teilweisen Umlenkung des Lichts ausgebildet, der sich mit Bezug auf die Gerade G auf einer Seite neben den Lichteintrittsbereichen 4 anschließt. Vorzugsweise ist das optische Element auf der entsprechenden gegenüberliegenden Seite analog, insbesondere mit Bezug auf die Gerade G symmetrisch gestaltet.

An der Vorderseite 2 des optischen Elements ist ein Lichtaustrittsbereich 6 zum zumindest teilweisen Austritt des Lichts ausgebildet.

Beim gezeigten Beispiel sind - im Querschnitt normal zu der Längsachse L betrachtet - durch das optische Element zwei flügelartige Bereiche F, F' gebildet, über die das Licht zumindest teilweise abgegeben wird, wobei die Formgebung des Lichtaustrittsbereiches 6 derart ist, dass hierdurch ein Strahlteiler für das eingestrahlte Licht gebildet ist. Das über die Lichteintrittsbereiche 4 eingestrahlte Licht wird an dem Lichtaustrittsbereich 6 hierzu teilweise umgelenkt und dadurch weiter in die beiden flügelartigen Bereiche F, F' geleitet. Im Weiteren wird das Licht an dem rückwärtigen umlenkenden Flächenbereich 5 ein weiteres Mal umgelenkt und dann über den Lichtaustrittsbereich 6 abgegeben.

Wie insbesondere in Fig. 2 beispielhaft skizziert, erstreckt sich der umlenkende Flächenbereich 5 entlang der Längsachse L und weist dabei Flächenbereiche 7 auf, die so ausgebildet sind, dass ihre Flächennormalen jeweils mit der Längsachse L einen Winkel einschließen, der kleiner oder größer als 90° ist. Der Einfachheit halber werden diese Flächenbereiche 7 hier auch als "schräge" Flächenbereiche 7 bezeichnet. Insbesondere kann die Gestaltung derart sein, dass die Flächennormalen jeweils mit der Längsachse L einen Winkel einschließen, der kleiner als 80° oder größer als 100° ist.

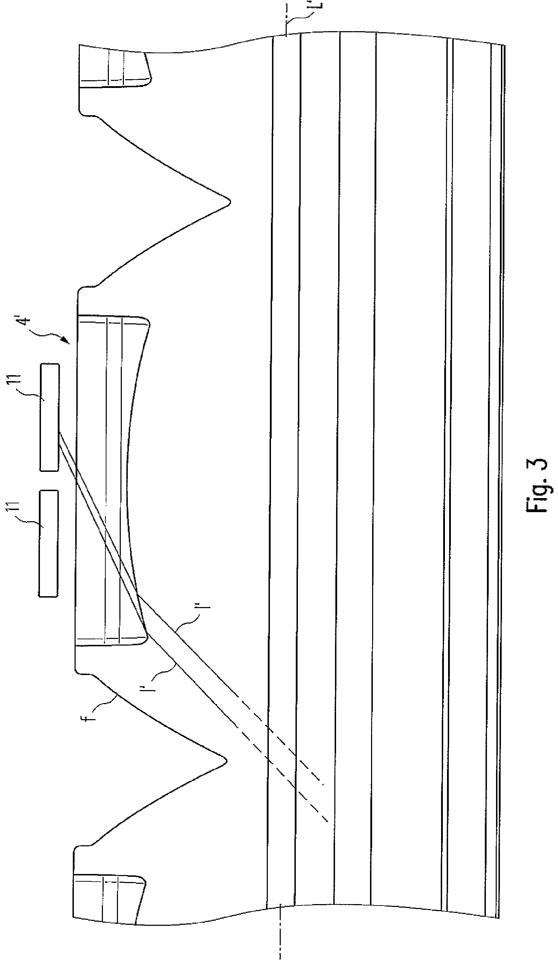

Um den Effekt dieser "schrägen" Flächenbereiche 7 zu illustrieren, ist in Fig. 3 ein Teil eines Längsschnitts durch eine entsprechende Anordnung skizziert, die keine derartigen schrägen Flächenbereiche aufweist. Wie angedeutet, verlaufen Lichtstrahlen l', die mit der entsprechenden Längsachse L' einen verhältnismäßig kleinen Winkel einschließen - hier auch als "flache" Lichtstrahlen bezeichnet - so, dass sie mit Wand- bzw. Flankenbereichen f des entsprechenden Lichteintrittsbereichs 4' nicht wechselwirken. In der Folge werden diese Lichtstrahlen l' durch das entsprechende optische Element nach Art eines Lichtleiters im Wesentlichen entlang der Längsachse L' weitergeleitet. Wenn diese Lichtstrahlen l' schließlich das optische Element verlassen, können sie aufgrund ihrer Verlaufsrichtung bei einem Betrachter der Anordnung eine unerwünschte Blendung hervorrufen.

Bei einem erfindungsgemäßen optischen Element werden nun entsprechend flach verlaufende Lichtstrahlen durch die schrägen Flächenbereiche 7 abgelenkt - insbesondere durch interne Totalreflexion - und dadurch weniger weit in Richtung der Längsachse L weitergeleitet. Sie verlassen das optische Element daher - mit Bezug auf die Darstellung der Fig. 3 - steiler nach unten, so dass eine Blendungsgefahr verringert ist.

Dieser Effekt ist besonders ausgeprägt, wenn sich die Lichteintrittsbereiche 4 jeweils entlang der Längsachse L vergleichsweise weit erstrecken, so, dass - wie als solches in Fig. 3 skizziert - die Lichtquelle 1 wenigstens zwei LEDs 11, 11 aufweist, die entlang der Längsachse angeordnet sind und die beide ihr Licht in einen der Lichteintrittsbereiche 4 abgeben. Mit anderen Worten sind bei dieser Ausgestaltung also wenigstens zwei LEDs einem Lichteintrittsbereich zugeordnet. Vorzugsweise sind dabei die Lichteintrittsbereiche 4 jeweils baugleich gestaltet.

Bei einem erfindungsgemäßen optischen Element können daher die Lichteintrittsbereiche 4 als solche so gestaltet sein, wie in Fig. 3 gezeigt.

Wie aus Fig. 2 hervorgeht, ist durch die Flächenbereiche 7 vorzugsweise eine wellenartige Struktur gebildet, die mit ihrer Haupterstreckung parallel zur Längsachse L ausgerichtet ist. Dabei sind die Flächenbereiche 7 weiterhin vorzugsweise aufgrund der wellenartigen Struktur so gestaltet, dass sie - entlang der Längsachse L betrachtet - an mehreren Stellen S einen maximalen Abstand von der Geraden G aufweisen, wobei diese Stellen S mit mittleren Bereichen der Lichteintrittsbereiche 4 korrelieren, insbesondere übereinstimmen. Wie in Fig. 2 beispielhaft skizziert, können die Stellen S die Lichteintrittsbereiche 4 jeweils genau mittig durchsetzen.

Die Flächenbereiche 7 können dabei durch eine abgerundete Strukturierung gebildet sein und/oder - wie in Fig. 2 skizziert - durch plane Flächen 71, 72, die durch Kanten 73 voneinander abgegrenzt sind. Beispielsweise kann die Gestaltung so sein, dass die wellenartige Struktur eine Sinus-Form beschreibt.

Weiterhin vorzugsweise weist der umlenkende Flächenbereich 5 - normal zu der Längsachse L betrachtet - mehrere Abstufungen 51, 52, 53, 54 auf; beispielsweise kann die Gestaltung derart sein, dass durch die Abstufungen 51, 52, 53, 54 von einer äußeren Begrenzung 8 des optischen Elements ausgehend Stufen gebildet sind, die bis zu den Lichteintrittsbereichen 4 führen.

Insbesondere können die Abstufungen 51, 52, 53, 54 dazu ausgestaltet sein, das im Inneren des optischen Elements verlaufende Licht - wie weiter oben beschrieben - nach Umlenkung durch den Lichtaustrittsbereich 6 ein weiteres Mal umzulenken.

Dabei sind die schrägen Flächenbereiche 7 vorzugsweise an derjenigen der Abstufungen 51, 52, 53, 54 ausgebildet, die der Geraden G am nächsten gelegen ist. Hier lässt sich der gewünschte Effekt besonders wirksam erzielen.

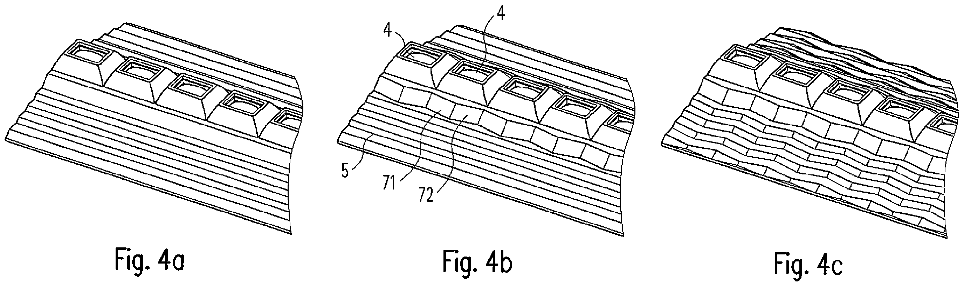

Zur weiteren Illustration ist in Fig. 4a ein entsprechendes optisches Element skizziert, das keine schrägen Flächenbereiche im Sinn der vorliegenden Beschreibung aufweist, in Fig. 4b ein optisches Element bei dem die schrägen Flächenbereiche 7 an der, der Geraden G nächstgelegenen Abstufung 51 ausgebildet sind und in Fig. 4c ein optisches Element, bei dem die schrägen Flächenbereiche 7 an allen Abstufungen 51, 52, 53, 54 ausgebildet sind. Hierdurch lässt sich ein nochmals weiter reduzierter UGR-Wert erzielen, allerdings ist der Herstellungsaufwand für die in Fig. 4c skizzierte Ausführung vergleichsweise hoch, so dass die in Fig. 4b skizzierte Ausführung insoweit bevorzugt ist.

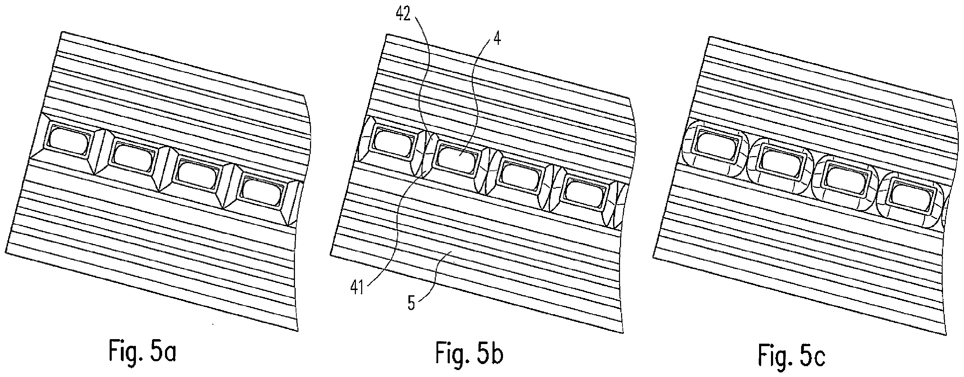

In Fig. 5a ist - wie in Fig. 4a - ein entsprechendes optisches Element skizziert, das keine schrägen Flächenbereiche aufweist; wie in Fig. 5b skizziert, lässt sich eine geeignete Umlenkung entsprechend flach verlaufender Lichtstrahlen auch dadurch bewirken, dass die zellenartigen Lichteintrittsbereiche 4 jeweils zumindest einen Oberflächenbereich 41, 42 aufweisen, dessen Flächennormale mit der Längsachse L einen Winkel einschließt, der größer als 0° und kleiner als 90° ist, insbesondere größer als 5° und kleiner als 85°. Die Oberflächenbereiche 41, 42 können dabei - wie in Fig. 5b angedeutet - jeweils plan gestaltet sein oder - wie in Fig. 5c angedeutet - gerundet gestaltet sein.

Mit anderen Worten sind die jeweils zueinander gewandten Flankenbereiche der Lichteintrittsbereiche 4 gleichsam verkippt bzw. zusätzlich abgerundet; hierdurch sind diese Flankenbereiche jeweils quasi näher an die Mitte des zugehörigen Lichteintrittsbereichs herangezogen, was zur Folge hat, dass noch mehr der flachen Lichtstrahlen beeinflusst werden, insbesondere totalreflektiert und dadurch - im Sinn der Darstellung der Fig. 3 - "nach unten" hin abgelenkt werden. Damit ist für diese Lichtstrahlen die Entblendung verbessert.

Eine besonders wirksame Entblendung lässt sich erzielen, wenn das optische Element bzw. die Anordnung zur Lichtabgabe sowohl die schrägen Flächenbereich 7, als auch die Oberflächenbereiche 41, 42 aufweist, wie beispielhaft bei der in Fig. 2 skizzierten Ausführung gezeigt.

Vorzugsweise ist das optische Element im Spritzgussverfahren hergestellt.

Durch die erfindungsgemäße Gestaltung lässt sich ein um 1,6 Punkte reduzierter UGR-Wert erzielen. Dies kann dazu führen, dass eine entsprechende Leuchte mit einer erfindungsgemäßen Anordnung zur Lichtabgabe in eine entsprechend bessere Kategorie eingestuft wird. Wenn beispielsweise mit einer entsprechenden Anordnung ohne die schrägen Flächen und ohne modifizierte Flankenbereiche der Lichteintrittsbereiche ein UGR-Wert von 20,5 erzielt wird, wird die betreffende Leuchte in die Kategorie UGR < 22 eingestuft. Durch die beschriebene erfindungsgemäße Gestaltung kann der UGR-Wert auf 18,9 gesenkt werden, so dass die Leuchte hierdurch in die bessere Kategorie UGR < 19 eingestuft wird.

Außerdem gilt: Je besser die Entblendung der Leuchte, desto eher kann die Leuchte in Anwendungen mit höheren Anforderungen im Bereich von Sehaufgaben eingesetzt werden. Daher wird durch die erfindungsgemäße Gestaltung auch das Anwendungsgebiet einer entsprechenden Leuchte erweitert.

## Patentansprüche

1. Optisches Element zur Beeinflussung eines von einer Lichtquelle (1) abgestrahlten Lichts, wobei sich das optische Element entlang einer Längsachse (L) erstreckt, aufweisend
- eine, der Lichtquelle (1) abgewandte Vorderseite (2) und
- eine, der Lichtquelle (1) zugewandte Rückseite (3),
wobei an der Rückseite (3) mehrere zellenartige Lichteintrittsbereiche (4) zum Eintritt des Lichts ausgebildet sind, die sich längs einer zu der Längsachse (L) parallelen Geraden (G) in einer Reihe erstrecken
und außerdem ein umlenkender Flächenbereich (5) zur zumindest teilweisen Umlenkung des Lichts ausgebildet ist, der sich mit Bezug auf die Gerade (G) auf einer Seite neben den Lichteintrittsbereichen (4) anschließt,
und an der Vorderseite (2) ein Lichtaustrittsbereich (6) zum zumindest teilweisen Austritt des Lichts ausgebildet ist,
**dadurch gekennzeichnet,**
**dass** sich der umlenkende Flächenbereich (5) entlang der Längsachse (L) erstreckt und dabei Flächenbereiche (7) aufweist, die so ausgebildet sind, dass ihre Flächennormalen jeweils mit der Längsachse (L) einen Winkel einschließen, der kleiner oder größer als 90° ist,
wobei der umlenkende Flächenbereich (5) - normal zu der Längsachse (L) betrachtet - mehrere Abstufungen (51, 52, 53, 54) aufweist,
wobei die Flächenbereiche (7) an derjenigen (51) der Abstufungen ausgebildet sind, die der Geraden (G) am nächsten gelegen ist,
wobei die Lichtquelle (1) wenigstens zwei, entlang der Längsachse (L) angeordnete LEDs (11) aufweist, wobei sich die Lichteintrittsbereiche (4) jeweils entlang der Längsachse (L) so weit erstrecken, dass die zwei LEDs (11) beide ihr Licht in einen der Lichteintrittsbereiche (4) abgeben.

2. Optisches Element nach Anspruch 1,
bei dem durch die Flächenbereiche (7) eine wellenartige Struktur gebildet ist, die mit ihrer Haupterstreckung parallel zur Längsachse (L) ausgerichtet ist.

3. Optisches Element nach Anspruch 2,
bei dem die Flächenbereiche (7) aufgrund ihrer wellenartigen Struktur so gestaltet sind, dass sie - entlang der Längsachse (L) betrachtet - an mehreren Stellen (S) einen maximalen Abstand von der Geraden (G) aufweisen, wobei diese Stellen (S) mit mittleren Bereichen der Lichteintrittsbereiche (6) korrelieren, insbesondere übereinstimmen.

4. Optisches Element nach einem der vorhergehenden Ansprüche,
bei dem die Flächenbereiche (7) durch eine abgerundete Strukturierung gebildet sind und/oder durch plane Flächen (71, 72), die durch Kanten (73) voneinander abgegrenzt sind.

5. Optisches Element nach einem der vorhergehenden Ansprüche,
bei dem die Flächenbereiche (7) lediglich an derjenigen (51) der Abstufungen ausgebildet sind, die der Geraden (G) am nächsten gelegen ist.

6. Anordnung zur Lichtabgabe, aufweisend
- eine Lichtquelle (1) zur Abstrahlung eines Lichts und
- ein optisches Element nach einem der vorhergehenden Ansprüche, wobei die Anordnung derart gestaltet ist, dass das Licht zumindest teilweise über die Lichteintrittsbereiche (4) in das optische Element eintritt,
wobei die Lichtquelle (1) mehrere LEDs umfasst,
wobei die Gestaltung derart ist, dass das Licht von zwei LEDs über einen der Lichteintrittsbereiche (4) in das optische Element eintritt.

## Claims

1. Optical element for influencing light emitted by a light source (1), wherein the optical element extends along a longitudinal axis (L), comprising
- a front side (2) facing away from the light source (1) and
- a rear side (3) facing toward the light source (1), wherein a plurality of cell-like light entry regions (4), which extend in a row along a straight line (G) parallel to the longitudinal axis (L), are formed on the rear side (3) for light to enter,
and in addition a deflecting surface region (5), which adjoins the light entry areas (4) on one side with respect to the straight line (G), is furthermore formed for at least partially deflecting the light,
and a light exit region (6) is formed on the front side (2) for at least partially emitting of light,
**characterized in that**
the deflecting region (5) extends along the longitudinal axis (L) and thereby comprises surface regions (7) which are configured in such a way that their surface normals respectively form an angle with the longitudinal axis (L) that is smaller or greater than 90°,
wherein, viewed perpendicularly to the longitudinal axis (L), the deflecting region (5) comprises a plurality of steps (51, 52, 53, 54),
wherein the surface regions (7) are formed on the one (51) of the steps that is closest to the straight line (G),
wherein the light source (1) comprises at least two LEDs (11) which are disposed along the longitudinal axis (L), wherein the light entry regions (4) respectively extend so far along the longitudinal axis (L) that the two LEDs (11) both emit their light into one of the light entry regions (4).

2. Optical element according to Claim 1,
in which a wave-like structure is formed by the surface regions (7), the alignment of the main extension of which is parallel to the longitudinal axis (L).

3. Optical element according to Claim 2,
in which, due to their wave-like structure, the surface regions (7) are formed in such a way that, viewed along the longitudinal axis (L), they have multiple locations (S) in which the distance from the straight line (G) is at a maximum, wherein these locations (S) correlate, in particular coincide, with central regions of the light entry regions (6) .

4. Optical element according to any one of the preceding Claims, in which the surface regions (7) are formed by a rounded structure and/or flat surfaces (71, 72) which are separated from one other by edges (73).

5. Optical element according to any one of the preceding Claims, wherein the surface regions (7) are formed only on the one (51) of the steps that is closest to the straight line (G).

6. Arrangement for emitting light, comprising
- a light source (1) for emitting light and
- an optical element according to any one of the preceding Claims, wherein the arrangement is designed in such a way that the light at least partially enters the optical element via the light entry regions (4),
wherein the light source (1) comprises a plurality of LEDs, wherein the configuration is such that the light from two LEDs enters the optical element via one of the light entry regions (4).

## Revendications

1. Élément optique servant à influencer une lumière émisee depuis une source de lumière (1), où l'élément optique s'étend le long d'un axe longitudinal (L), présentant
- une face avant (2) orientée à l'opposé de la source de lumière (1) et
- une face arrière (3) orientée vers la source de lumière (1),
où plusieurs zones d'entrée de lumière cellulaires (4) en forme de cellules sont formées pour l'entrée de la lumière au niveau de la face arrière (3), lesquelles s'étendent dans une rangée le long d'une ligne droite (G) parallèle à l'axe longitudinal (L)
et en outre une zone de surface déflectrice (5) est formée pour dévier au moins partiellement la lumière, laquelle fait suite, sur un côté par rapport à la ligne droite (G), aux zones d'entrée de lumière (4),
et une zone de sortie de lumière (6) est formée au niveau de la face avant (2) pour la sortie au moins partielle de la lumière,
**caractérisé en ce que**
la zone de surface déflectrice (5) s'étend le long de l'axe longitudinal (L) et présente dans ce cadre des zones de surfaces (7) qui sont formées de manière à ce que leurs normales à la surface forment respectivement, avec l'axe longitudinal (L), un angle qui est inférieur ou supérieur à 90 °,
où la zone de surface déflectrice (5), observée de manière normale par rapport à l'axe longitudinal (L), présente plusieurs paliers (51, 52, 53, 54),
où les zones de surface (7) sur lesquelles sont formés les paliers (51),sont celles les plus proches de la ligne droite (G),
où la source de lumière (1) présente au moins deux DEL (11) disposées le long de l'axe longitudinal (L), où les zones d'entrée de lumière (4) s'étendent respectivement le long de l'axe longitudinal (L) si loin que les deux DEL (11) émettent toutes les deux leur lumière dans une des zones d'entrée de lumière (4).

2. Élément optique selon la revendication 1,
dans lequel une structure de type ondulée est formée par les zones de surface (7), laquelle est orientée avec son extension principale parallèle à l'axe longitudinal (L).

3. Élément optique selon la revendication 2,
dans lequel les zones de surface (7), en raison de leur structure de type ondulée, sont conçues de manière à présenter, lorsqu'elles sont observées le long de l'axe longitudinal (L), à plusieurs endroits (S), une distance maximale par rapport à la ligne droite (G), où ces endroits (S) sont en corrélation, notamment coïncident, avec des zones médianes des zones d'entrée de lumière (6).

4. Élément optique selon l'une des revendications précédentes,
dans lequel les zones de surface (7) sont formées par une structuration arrondie et/ou par des surfaces planes (71, 72) qui sont délimitées les unes par rapport aux autres par des arêtes (73).

5. Élément optique selon l'une des revendications précédentes,
dans lequel les zones de surface (7) sont formées uniquement sur les paliers (51) qui sont les plus proches de la ligne droite (G).

6. Agencement destiné à l'émission de lumière, présentant
- une source de lumière (1) destinée à l'émission d'une lumière et
- un élément optique selon l'une des revendications précédentes, où l'agencement est conçu de sorte que la lumière entre dans l'élément optique au moins partiellement par le biais des zones d'entrée de lumière (4),
où la source de lumière (1) comprend plusieurs DEL,
où la conception est telle que la lumière de deux DEL entre dans l'élément optique par le biais de l'une des zones d'entrée de lumière (4).
